# EUROPÄISCHE PATENTANMELDUNG

(11) **EP 2 851 674 A1**
(43) Veröffentlichungstag der Anmeldung: **25.03.2015**
(21) Anmeldenummer: 14185946.2
(22) Anmeldetag: 23.09.2014
(51) Int. Cl.: G01N 17/00

(54) **Neues Bewitterungsverfahren für Proben**

(30) Priorität: 24.09.2013 DE 102013219199
(71) Anmelder: Fraunhofer Gesellschaft zur Förderung der angewandten Forschung e.V., 80686 München (DE)
(72) Erfinder: Barz, Jakob, 70199 Stuttgart (DE); Haupt, Michael, 70771 Echterdingen (DE); Oehr, Christian, 71083 Herrenberg (DE); Mayer, Joachim, 71106 Magstadt (DE)
(74) Vertreter: Schrell, Andreas

(57) **Zusammenfassung**

Die vorliegende Erfindung betrifft eine Vorrichtung zur Behandlung einer Probe, deren Verwendung zur Behandlung einer Probe sowie ein Verfahren zur Behandlung einer Probe.

## Beschreibung

Die vorliegende Erfindung betrifft eine Vorrichtung zur Behandlung einer Probe, deren Verwendung zur Behandlung einer Probe sowie ein Verfahren zur Behandlung einer Probe.

Lacke, beispielsweise im Automobilbereich, müssen auf ihre Verwitterungsbeständigkeit getestet werden. Zur Untersuchung der Lichtstabilität werden dabei beispielsweise Tests nach SAE J2527 durchgeführt. Diese Tests sind mit einigen tausend Stunden jedoch sehr langwierig und aufgrund der begrenzten Lebensdauer und Leistungsaufnahme der Lichtquellen auch sehr kostenintensiv.

Bekannt sind auch Bewitterungskammern mit Xenonbogenstrahlung. Diese erfordern einen erheblichen Aufwand bezüglich der Temperatursteuerung, Kühlung des Strahlers und Simulation von Regen. Eine typische Testdauer mit diesem Verfahren beträgt ca. 4000 Stunden. Die zum Erhalt eines Sonnenlichtähnlichen Spektrums eingesetzten Xenon-Plasmabrenner haben eine Lebensdauer, die oft nur einen Messzyklus ausreicht.

Ebenfalls ist die Florida-Bewitterung, insbesondere für Automobildecklacke, bekannt. Dabei werden neue Lacksysteme und neue Farbtöne für Automobilelackierungen in Florida unter speziellen Bedingungen bis zu 5 Jahre bewittert.

Ebenfalls kann eine künstliche Bewitterung mit Fluoreszenzstrahlung erreicht werden. Diese Bewitterungsgeräte mit Fluoreszenzstrahlern bringen einen gerätetechnisch hohen Aufwand mit sich. Sie bilden den UV-Anteil des Sonnenspektrums relativ gut ab, haben jedoch den großen Nachteil, dass sie keine, den Polymerabbau in den Beschichtungen der Proben beeinflussenden VIS- und IR-Strahlungsbereich aufweisen.

Alternativ kann auch eine Plasmabewitterung durchgeführt werden. Ein entsprechendes Verfahren ist in EP 1 486 768 A1 offenbart, wobei die zu behandelnden Proben allein mit Sauerstoffplasma behandelt werden. DD 266 849 A1 offenbart relativ allgemein, dass zur künstlichen Alterung von nichtmetallischen Werkstoffen ein Hochfrequenz-Entladungsplasma verwendet werden kann.

Die im Stand der Technik bekannten Verfahren und Vorrichtungen zur Bewitterung von Proben haben den Nachteil, dass sie kosten- und zeitintensiv sind. Meist dauert die Bewitterung mehrere Wochen oder sogar Jahre. Zudem ist noch kein Verfahren bekannt, dass eine künstliche, möglichst schnelle, Bewitterung bereitstellt, die vergleichbar mit einer natürlichen Bewitterung ist.

Das der Erfindung zugrundeliegende technische Problem liegt also darin, bevorzugt die oben genannten Nachteile zu überwinden, insbesondere Mittel bereitzustellen, die eine Bewitterung einer Probe möglichst kostengünstig und zeitsparend ermöglichen. Insbesondere soll durch die bereitgestellten Mittel eine Bewitterung einer Probe erfolgen, welche einer natürliche Bewitterung, insbesondere hinsichtlich der Sonneneinstrahlung und anderen Witterungseinflüssen, sehr nahe kommt, bevorzugt identisch dazu ist.

Die vorliegende Erfindung löst das ihr zugrundeliegende technische Problem durch die Bereitstellung der Lehren der unabhängigen Patentansprüche.

Die vorliegende Erfindung betrifft insbesondere eine Vorrichtung zur Behandlung einer Probe, wobei die Vorrichtung einen Plasmaerzeugungsraum und einen Probenraum aufweist, wobei in dem Plasmaerzeugungsraum eine Plasmaerzeugungsvorrichtung und in dem Probenraum eine Probenpositionierungsvorrichtung vorhanden ist, wobei die Plasmaerzeugungsvorrichtung und die Probenpositionierungsvorrichtung räumlich voneinander beabstandet sind und so positioniert, bevorzugt zu einer Plasmastrahlungsfiltervorrichtung, auch als Plasmafiltervorrichtung bezeichnet, und ausgebildet sind, dass ein um mindestens 0,1% geringerer Anteil der durch die Plasmaerzeugungsvorrichtung erzeugten direkten Plasmastrahlung (bezogen auf jeweils eine Komponente der direkten Plasmastrahlung, bevorzugt auf die in der Plasmastrahlung vorhandenen Teilchen, Elektronen oder Photonen) auf eine in der Probenpositionierungsvorrichtung positionierbare Probe trifft, als bei einer Vorrichtung, aufweisend die gleiche Plasmaerzeugungsvorrichtung und die gleiche Probenpositionierungsvorrichtung, wobei die gleiche durch die Plasmaerzeugungsvorrichtung erzeugte direkte Plasmastrahlung ungefiltert und teilweise senkrecht, bevorzugt zumindest teilweise senkrecht, auf die gleiche in der Probenpositionierungsvorrichtung positionierbare Probe trifft.

Bevorzugt ist eine Vorrichtung vorgesehen, wobei die Plasmaerzeugungsvorrichtung und die Probenpositionierungsvorrichtung so zueinander positioniert, dass ein um mindestens 0,1% geringerer Anteil der durch die Plasmaerzeugungsvorrichtung erzeugten direkten Plasmastrahlung (bezogen auf jeweils eine Komponente der direkten Plasmastrahlung, bevorzugt auf die in der Plasmastrahlung vorhandenen Teilchen, Elektronen oder Photonen) auf eine in der Probenpositionierungsvorrichtung positionierbare Probe trifft, als bei einer solchen Vorrichtung, aufweisend die gleiche Plasmaerzeugungsvorrichtung und die gleiche Probenpositionierungsvorrichtung, wobei die Plasmaerzeugungsvorrichtung zentral, bevorzugt genau in der Mitte, oberhalb der Probenpositionierungsvorrichtung angeordnet ist.

Bevorzugt ist eine Vorrichtung vorgesehen, wobei die Plasmaerzeugungsvorrichtung, die Probenpositionierungsvorrichtung und die Plasmastrahlungsfiltervorrichtung so zueinander positioniert sind, dass ein um mindestens 0,1% geringerer Anteil der durch die Plasmaerzeugungsvorrichtung erzeugten direkten Plasmastrahlung (bezogen auf jeweils eine Komponente der direkten Plasmastrahlung, bevorzugt auf die in der Plasmastrahlung vorhandenen Teilchen, Elektronen oder Photonen) auf eine in der Probenpositionierungsvorrichtung positionierbare Probe trifft, als bei einer solchen Vorrichtung ohne die Plasmastrahlungsfiltervorrichtung.

Bevorzugt ist eine Vorrichtung vorgesehen, wobei die Plasmaerzeugungsvorrichtung und die Probenpositionierungsvorrichtung so zueinander positioniert sind, bevorzugt zu der Plasmastrahlungsfiltervorrichtung positioniert sind, dass ein um mindestens 0,1% geringerer Anteil der durch die Plasmaerzeugungsvorrichtung erzeugten direkten Plasmastrahlung (bezogen auf jeweils eine Komponente der direkten Plasmastrahlung, bevorzugt auf die in der Plasmastrahlung vorhandenen Teilchen, Elektronen oder Photonen) auf eine in der Probenpositionierungsvorrichtung positionierbare Probe trifft, als bei einer solchen Vorrichtung ohne Plasmastrahlungsfiltervorrichtung und aufweisend die gleiche Plasmaerzeugungsvorrichtung und die gleiche Probenpositionierungsvorrichtung, wobei die Plasmaerzeugungsvorrichtung zentral, bevorzugt genau in der Mitte, oberhalb der Probenpositionierungsvorrichtung liegt.

Der um mindestens 0,1% geringere Anteil der durch die Plasmaerzeugungsvorrichtung erzeugten direkten Plasmastrahlung (bezogen auf jeweils eine Komponente der direkten Plasmastrahlung, bevorzugt auf die in der Plasmastrahlung vorhandenen Teilchen, Elektronen oder Photonen), der auf eine in der Probenpositionierungsvorrichtung positionierbare Probe trifft, wird bevorzugt dadurch erreicht, dass entweder ein Teil der direkten Plasmastrahlung gefiltert wird oder die Plasmaerzeugungsvorrichtung zu der Probenpositionierungsvorrichtung, bevorzugt der positionierten Probe, so angeordnet ist, dass keine direkte Plasmastrahlung senkrecht auf die Probe treffen kann.

Die Plasmaerzeugungsvorrichtung ist bevorzugt so zur Probenpositionierungsvorrichtung in der Vorrichtung zur Behandlung einer Probe angeordnet, dass ein Teil des Plasmas, bevorzugt der Plasmastrahlung, direkt auf eine in der Probenpositionierungsvorrichtung positionierbare, bevorzugt positionierte, Probe treffen kann.

Die vorliegende Erfindung betrifft bevorzugt eine Vorrichtung zur Behandlung einer Probe, wobei die Vorrichtung einen Plasmaerzeugungsraum und einen Probenraum aufweist, wobei in dem Plasmaerzeugungsraum eine Plasmaerzeugungsvorrichtung und in dem Probenraum eine Probenpositionierungsvorrichtung vorhanden ist, wobei die Plasmaerzeugungsvorrichtung und die Probenpositionierungsvorrichtung räumlich voneinander beabstandet sind und so zueinander positioniert, bevorzugt zu einer Plasmastrahlungsfiltervorrichtung, und ausgebildet sind, dass ein um mindestens 0,1% geringerer Anteil der durch die Plasmaerzeugungsvorrichtung erzeugten direkten Plasmastrahlung (bezogen auf jeweils eine Komponente der direkten Plasmastrahlung, bevorzugt auf die in der Plasmastrahlung vorhandenen Teilchen, Elektronen oder Photonen) auf eine in der Probenpositionierungsvorrichtung positionierbare Probe trifft, als bei einer solchen Vorrichtung ohne Plasmastrahlungsfiltervorrichtung, das heißt ungefiltert.

Die vorliegende Erfindung stellt somit eine Vorrichtung bereit, wobei ein Teil der durch die Plasmaerzeugungsvorrichtung erzeugten direkten Plasmastrahlung filterbar ist, sodass nur eine bestimmte Plasmastrahlung direkt auf die in einer Probenpositionierungsvorrichtung positionierbare, bevorzugt positionierte, Probe trifft, und/oder wobei durch einer bestimmten Anordnung der Plasmaerzeugungsvorrichtung zu der Probenpositionierungsvorrichtung die direkt auf eine in der Probenpositionierungsvorrichtung positionierbare, bevorzugt positionierte, Probe treffende Plasmastrahlung reduziert ist.

Erfindungsgemäß ist daher bevorzugt vorgesehen, dass die direkte Plasmastrahlung ungefiltert auf die in einer Probenpositionierungsvorrichtung positionierbare Probe einwirkt. Jedoch ist in diesem Fall die Plasmaerzeugungsvorrichtung bevorzugt so zu der in der Probenpositionierungsvorrichtung positionierbaren Probe angeordnet, dass keine direkte Plasmastrahlung mehr senkrecht auf die Probe treffen kann. Bevorzugt ist die Plasmaerzeugungsvorrichtung versetzt zu der mindestens einen Oberfläche der zu behandelnden Probe angeordnet, auf die die direkte Plasmastrahlung treffen kann.

Erfindungsgemäß wird unter dem Ausdruck "senkrecht auf die Probe treffen" verstanden, dass die direkte Plasmastrahlung auf die gemittelte Ausrichtung der mindestens einen Oberfläche der Probe, auf die die direkte Plasmastrahlung treffen kann, senkrecht auftrifft.

Bevorzugt sind die Plasmaerzeugungsvorrichtung und die Probenpositionierungsvorrichtung so zueinander positioniert, dass keine der von der Plasmaerzeugungsvorrichtung erzeugten direkten Plasmastrahlung senkrecht auf die Probe, bevorzugt auf die der Plasmaerzeugungsvorrichtung zugewandten Oberfläche der Probe, treffen kann. Bevorzugt verläuft die Hauptströmungsrichtung des Plasmas nicht senkrecht zur der zu behandelnden Oberfläche der Probe, bevorzugt zu deren gemittelten Ausrichtung.

Unter dem Begriff "Hauptströmungsrichtung" eines Plasmas wird erfindungsgemäß diejenige Strömungsrichtung verstanden, in welche der größte Teilchenfluss des Plasmas erfolgt. Im Zusammenhang mit der vorliegenden Erfindung wird bevorzugt diejenige Strömungsrichtung eines Plasmas als "Hauptströmungsrichtung eines Plasmas" verstanden, in welcher die Plasmastrahlung, bevorzugt in gemittelter Form, in unmittelbarer Nähe, bevorzugt in einem Abstand von weniger als 5 cm, zu der zu behandelnden Probe strömt. In einer bevorzugten Ausführungsform der vorliegenden Erfindung kann sich daher das Plasma zunächst, d.h. in der Nähe der Plasmaerzeugungsvorrichtung, in beliebiger Richtung ausbreiten, bevorzugt strömen, solange die Strömungsrichtung, auch als Hauptströmungsrichtung des Plasmas bezeichnet, im Wesentlichen parallel, bevorzugt parallel, zu einer in der Probenpositionierungsvorrichtung positionierbaren, bevorzugt positionierten, Probe ist, wenn ein Teil der Plasmastrahlung auf die in der Probenpositionierungsvorrichtung positionierbare, bevorzugt positionierte, Probe trifft. Bevorzugt ergibt sich die Hauptströmungsrichtung durch die Fließrichtung der Plasmastrahlung vom Plasmaerzeugungsort hin zu einem Auslass, bevorzugt im Probenraum oder Plasmaerzeugungsraum, bei dem insbesondere durch eine Vakuumpumpe, die Plasmastrahlung entfernt, bevorzugt abgesaugt, wird.

Bevorzugt ist der Anteil der durch die Plasmaerzeugungsvorrichtung erzeugten direkten und auf eine in der Probenpositionierungsvorrichtung positionierbare, bevorzugt positionierte, Probe treffenden Plasmastrahlung um mindestens 1 %, bevorzugt mindestens 5 %, bevorzugt um mindestens 10 %, bevorzugt um mindestens 20 %, bevorzugt um mindestens 50 %, bevorzugt um mindestens 70 %, bevorzugt um 100 % (bezogen auf jeweils eine Komponente der direkten Plasmastrahlung, bevorzugt auf die in der Plasmastrahlung vorhandenen Teilchen, Elektronen oder Photonen) geringer als bei einer Vorrichtung, welche die gleiche Plasmaerzeugungsvorrichtung und die gleiche Probenpositionierungsvorrichtung aufweist, wobei jedoch die gleiche durch die Plasmaerzeugungsvorrichtung erzeugte direkte Plasmastrahlung ungefiltert und zum Teil senkrecht auf die in der gleichen Probenpositionierungsvorrichtung positionierbare, bevorzugt positionierte, Probe treffen kann.

Durch die erfindungsgemäße Vorrichtung, insbesondere durch das erfindungsgemäße Verfahren, ist es möglich die Bewitterung einer Probe zu verbessern, insbesondere zu beschleunigen. Zusätzlich ist es möglich, das Verfahren zur Behandlung einer Probe, insbesondere zur Bewitterung einer Probe, effizienter, insbesondere energieeffizienter durchzuführen. Mit der erfindungsgemäßen Vorrichtung und dem erfindungsgemäßen Verfahren wird bevorzugt bereits nach maximal einer Stunde, bevorzugt nach maximal 50 Minuten ein Schadensbild erreicht, das mit üblichen Kurzbewitterungsmethoden aus dem Stand der Technik erst nach mehreren 1000 Bewitterungsstunden erreicht wird. Insbesondere durch die Variation des Druckes und/oder des Plasmagases wird überraschenderweise Einfluss auf das Emissionsspektrum des Plasmas genommen, wodurch die Bewitterungszeit, d.h. die Verfahrensdauer zur Behandlung einer Probe, weiter reduziert werden kann. Durch den gezielten Einsatz von Plasmastrahlung, d.h. mit einem bestimmten Teil der Plasmastrahlung, und unterschiedlichen Atmosphären in dem Probenraum, insbesondere durch das Einstellen einer bestimmten Temperatur, eines bestimmten Drucks, einer bestimmten Gaszusammensetzung und/oder das Bereitstellen und Einwirkenlassen einer bestimmten Plasmastrahlung, die durch verschiedene Plasmaquellen, wie Gleichstrom, Kilohertz, Megahertz und Mikrowelle, erzeugt werden kann, wird die erforderliche Bewitterungszeit zusätzlich verkürzt. Dabei kann die Bewitterung, bevorzugt die Alterung von Proben, insbesondere von deren Oberfläche, beschleunigt und zugleich Energie gespart werden, insbesondere weil die Plasmaprozesse effizienter ablaufen. Mit dem erfindungsgemäßen Verfahren, insbesondere mit der erfindungsgemäßen Vorrichtung ist es zudem möglich, neu entwickelte Lacke und Polymere einem schnellen Testverfahren und/oder Prüfverfahren zu unterziehen, welche einen deutlich geringeren Zeit- und/oder Energieaufwand haben als aus dem Stand der Technik bekannte Verfahren und/oder Vorrichtungen zur Behandlung, insbesondere zur Bewitterung von Proben.

Die erfindungsgemäße "Plasmastrahlung" umfasst jede durch die Plasmaerzeugungsvorrichtung erzeugte Plasmastrahlung, das heißt sowohl die sich bewegenden Teilchen, bevorzugt Neutralteilchen und Ionen, als auch die sich bewegenden Elektronen. Die erfindungsgemäße Plasmastrahlung zeichnet sich insbesondere dadurch aus, dass sich die Teilchen, insbesondere die Neutralteilchen und die Ionen, die Elektronen sowie die elektromagnetische Strahlung, auch als Photonen bezeichnet, sich von der Plasmaerzeugungsvorrichtung weg bewegen, bevorzugt in Richtung der zu behandelnden Probe, bevorzugt der Oberfläche der zu behandelnden Probe. Mit der erfindungsgemäßen Plasmastrahlung geht bevorzugt auch ein Potentialfall einher. Somit umfasst die erfindungsgemäße Plasmastrahlung sowohl Teilchenstrahlung, bevorzugt Ionenstrahlung, als auch Elektronenstrahlung, insbesondere auch elektromagnetische Strahlung. Die Komponenten der Plasmastrahlung, insbesondere der direkten Plasmastrahlung, sind daher bevorzugt ausgewählt aus Teilchen, Elektronen und Photonen.

Unter dem Begriff "direkt auf eine in der Probenpositionierungsvorrichtung positionierbare Probe treffende Plasmastrahlung" wird diejenige Plasmastrahlung verstanden, die, nachdem sie in der Plasmaerzeugungsvorrichtung erzeugt wurde, unmittelbar und auf direktem Wege, d.h. ohne dass ihre Flugrichtung durch Zusammenstöße mit anderen Teilchen, insbesondere Ionen, Atome oder Molekülen, oder mit in der Vorrichtung zum Behandeln eines Plasmas vorhandenen Anordnungen oder Vorrichtungen, insbesondere Spiegeln, Platten oder räumlichen Abgrenzungen, abgelenkt wird. Bevorzugt trifft die direkte Plasmastrahlung auf die Probe, ohne dass die Flugbahn der entsprechenden Teilchen und/oder der entsprechenden Elektronen nach dem Austreten aus der Plasmaerzeugungsvorrichtung verändert wurde.

Unter dem Begriff "direkte Plasmastrahlung" wird diejenige Plasmastrahlung verstanden, die, nachdem sie in der Plasmaerzeugungsvorrichtung erzeugt wurde, sich ausbreitet, ohne dass ihre Flugbahn durch Zusammenstöße mit anderen Teilchen, insbesondere Ionen, Atome oder Moleküle, oder mit der in der Vorrichtung zum Behandeln eines Plasmas vorhandenen Anordnungen oder Vorrichtungen, insbesondere Spiegeln, Platten oder räumlichen Abgrenzungen, abgelenkt wird. Die direkte Plasmastrahlung liegt demgemäß bevorzugt vor, wenn die Flugbahn entsprechender Teilchen und/oder Elektronen nach dem Austreten aus der Plasmaerzeugungsvorrichtung nicht verändert wurde.

Unter dem Begriff "Bewitterung" wird erfindungsgemäß die Simulation von Umwelteinflüssen verstanden, wobei eine Probe einer gezielten künstlichen Wetterexponierung ausgesetzt wird. Diese Bewitterung erfolgt bevorzugt in einer kurzen Zeitspanne; hat aber sehr ähnliche oder identische Veränderungen an der Probe, insbesondere auf deren Oberfläche wie eine natürliche Wetterexponierung hervorgerufen. Dementsprechend wird eine Probe, insbesondere die Oberfläche einer Probe, bestimmten Witterungsbedingungen, bevorzugt einer bestimmten Temperatur, einem bestimmten Sonnenspektrum und einer bestimmten Feuchtigkeit ausgesetzt. Erfindungsgemäß soll die Bewitterung bevorzugt durch eine Plasmastrahlung, auch als "Plasmabewitterung" bezeichnet, erfolgen.

Die vorliegende Erfindung betrifft auch eine Vorrichtung zur Behandlung einer Probe, wobei die Vorrichtung einen Plasmaerzeugungsraum, einen Probenraum, und mindestens eine Plasmastrahlungsfiltervorrichtung aufweist, wobei in dem Plasmaerzeugungsraum eine Plasmaerzeugungsvorrichtung und in dem Probenraum eine Probenpositionierungsvorrichtung vorhanden ist, wobei die Plasmaerzeugungsvorrichtung und die Probenpositionierungsvorrichtung räumlich voneinander beabstandet sind und wobei die mindestens eine Plasmastrahlungsfiltervorrichtung zwischen der Plasmaerzeugungsvorrichtung und der Probenpositionierungsvorrichtung vorliegt, wobei die Plasmastrahlungsfiltervorrichtung so positioniert und ausgebildet ist, dass sie mindestens einen Teil der durch die Plasmaerzeugungsvorrichtung erzeugten und direkt auf eine in der Probenpositionierungsvorrichtung positionierbare Probe treffenden Plasmastrahlung filtert.

Bevorzugt betrifft die vorliegende Erfindung eine Vorrichtung, wobei die Vorrichtung mindestens eine Plasmastrahlungsfiltervorrichtung aufweist, wobei die Plasmastrahlungsfiltervorrichtung zwischen der Plasmaerzeugungsvorrichtung und der Probenpositionierungsvorrichtung vorliegt und so positioniert und ausgebildet ist, dass sie mindestens einen Teil der durch die Plasmaerzeugungsvorrichtung erzeugten und direkt auf eine in der Probenpositionierungsvorrichtung positionierbare Probe treffenden Plasmastrahlung filtert.

Bevorzugt betrifft die vorliegende Erfindung eine Vorrichtung, wobei die Plasmaerzeugungsvorrichtung und die Probenpositionierungsvorrichtung räumlich voneinander beabstandet sind und so zueinander positioniert sind, dass sich die Hauptströmungsrichtung der durch die Plasmaerzeugungsvorrichtung erzeugten Plasmastrahlung räumlich versetzt und im Wesentlichen parallel, bevorzugt parallel, zu einer in der Probenpositionierungsvorrichtung positionierbaren Probe verläuft.

Bevorzugt wird in der Plasmaerzeugungsvorrichtung das Plasma durch Gleichstrom (DC), Kilohertz (KHz), Megahertz (MHz) oder mit Mikrowellen erzeugt.

Bevorzugt ist die Plasmaerzeugungsvorrichtung von der Plasmapositionierungsvorrichtung in einem Abstand von 1 mm bis 100 cm, bevorzugt 1 mm bis 20 cm, bevorzugt 2 cm bis 20 cm, bevorzugt 1 mm bis 4 cm, bevorzugt 1 bis 2 mm, bevorzugt 5 bis 100 cm, bevorzugt 20 bis 90 cm, bevorzugt 30 bis 70 cm, bevorzugt 40 bis 60 cm räumlich voneinander beabstandet. Ist der Abstand zwischen der Plasmaerzeugungsvorrichtung und der Plasmapositionierungsvorrichtung im Millimeterbereich, erfolgt die Plasmaerzeugung bevorzugt durch eine elektrisch behinderte Entladung, bevorzugt durch Sandwich-Elektroden. Bevorzugt ist die Plasmaerzeugungsvorrichtung und die Plasmapositionierungsvorrichtung so räumlich voneinander beabstandet, dass die mindestens eine Plasmastrahlungsfiltervorrichtung zwischen der Plasmaerzeugungsvorrichtung und der Probenpositionierungsvorrichtung vorliegen kann, insbesondere wenn die Probe in der Probenpositionierungsvorrichtung positioniert ist.

Bevorzugt ist der Abstand zwischen der Plasmaerzeugungsvorrichtung und der mindestens einen Plasmastrahlungsfiltervorrichtung, bevorzugt der am nächsten zu der Plasmaerzeugungsvorrichtung liegenden Plasmastrahlungsfiltervorrichtung 1 mm bis 100 cm, bevorzugt 1 mm bis 20 cm, bevorzugt 2 cm bis 20 cm, bevorzugt 1 mm bis 4 cm, bevorzugt 1 bis 2 mm, bevorzugt mindestens 10 cm, bevorzugt mindestens 20 cm, bevorzugt mindestens 30 cm, bevorzugt mindestens 40 cm, bevorzugt 5 bis 20 cm, bevorzugt 5 bis 10 cm.

Bevorzugt ist der Abstand zwischen der Probenpositionierungsvorrichtung, bevorzugt zur Probe, und der mindestens einen Plasmastrahlungsfiltervorrichtung, bevorzugt zu der am nächsten zu der Probenpositionierungsvorrichtung, bevorzugt zur Probe, liegenden Plasmastrahlungsfiltervorrichtung 1 mm bis 100 cm, bevorzugt 1 mm bis 20 cm, bevorzugt 2 cm bis 20 cm, bevorzugt 1 mm bis 4 cm, bevorzugt 1 bis 2 mm, bevorzugt mindestens 10 cm, bevorzugt mindestens 20 cm, bevorzugt mindestens 30 cm, bevorzugt mindestens 40 cm, bevorzugt 5 bis 20 cm, bevorzugt 5 bis 10 cm.

Bevorzugt ist die Probenpositionierungsvorrichtung als Haltevorrichtung oder als Klemmvorrichtung ausgebildet. Bevorzugt ist durch die Plasmapositionierungsvorrichtung die Probe arretierbar, so dass sie bevorzugt während des gesamten Verfahrens zur Behandlung der Probe ihre Position nicht ändert.

Bevorzugt ist die Plasmastrahlungsfiltervorrichtung so positioniert und ausgebildet, dass sie mindestens einen Teil der, bevorzugt jede durch die Plasmaerzeugungsvorrichtung erzeugte und direkt auf eine in der Probenpositionierungsvorrichtung positionierbare Probe treffende Plasmastrahlung filtert. Bevorzugt ist die Plasmastrahlungsfiltervorrichtung so positioniert und ausgebildet, dass sie mindestens einen Teil der, bevorzugt jede durch die Plasmaerzeugungsvorrichtung erzeugte und direkt auf die in der Probenpositionierungsvorrichtung positionierte Probe treffende Plasmastrahlung filtert.

Bevorzugt weist die Vorrichtung eine in der Probenpositionierungsvorrichtung positionierte Probe auf. Bevorzugt ist die Probe als zwei- oder dreidimensionaler Körper ausgebildet, wobei dieser Körper eine Beschichtung aus Lack und/oder Polymeren, insbesondere anorganischen und/oder organischen Polymeren aufweist. Alternativ oderzusätzlich ist die Probe bevorzugt als Kunststoff, bevorzugt bestehend aus Polymeren, insbesondere anorganischen und/oder organischen Polymeren, ausgebildet, bevorzugt mit oder ohne Beschichtung.

Bevorzugt ist die in der Probenpositionierungsvorrichtung positionierbare Probe kein kugelförmiger oder ovaler zwei- oder drei-dimensionaler Körper.

Die vorliegende Erfindung betrifft in bevorzugter Ausführungsform eine Vorrichtung, wobei die mindestens eine Plasmastrahlungsfiltervorrichtung als optischer Filter oder als elektrisch leitendes Gitter ausgebildet ist. Bevorzugt weist die Vorrichtung mindestens zwei, bevorzugt genau zwei Plasmastrahlungsfiltervorrichtungen auf, wobei die erste Plasmastrahlungsfiltervorrichtung als elektrisch leitendes Gitter und die zweite Plasmastrahlungsfiltervorrichtung als optischer Filter ausgebildet ist. Bevorzugt sind die mindestens zwei, bevorzugt genau zwei Plasmastrahlungsfiltervorrichtungen so in der Vorrichtung zur Behandlung einer Probe angeordnet, dass ein Teil von der Plasmaerzeugungsvorrichtung erzeugten direkten Plasmastrahlung zunächst von der als elektrisch leitendes Gitter ausgebildeten ersten Plasmastrahlungsfiltervorrichtung und anschließend von der als optischer Filter ausgebildeten zweiten Plasmastrahlungsfiltervorrichtung gefiltert wird.

Der optische Filter ist so ausgebildet, dass er zumindest einen Teil der durch die Plasmaerzeugungsvorrichtung erzeugten Elektronenstrahlung, bevorzugt auch der elektromagnetischen Strahlung filtert.

Unter dem Begriff "filtern" wird ein Vorgang verstanden, bei dem ein bestimmter Teil der durch die Plasmaerzeugungsvorrichtung erzeugten Plasmastrahlung zumindest teilweise, bevorzugt zu mindestens 90%, bevorzugt zu mindestens 95%, bevorzugt zu 100%, herausgefiltert wird, das heißt der herausgefilterte Teil der Plasmastrahlung, insbesondere der Ionenstrahlung und/oder der Elektronenstrahlung und/oder der Photonenstrahlung, wird bevorzugt durch die Plasmastrahlungsfiltervorrichtung zumindest teilweise, bevorzugt zu mindestens 90%, bevorzugt zu mindestens 95%, bevorzugt zu 100%, absorbiert und/oder reflektiert. Ein anderer Teil der Plasmastrahlung wird von der Plasmastrahlungsfiltervorrichtung, bevorzugt unverändert, durchgelassen und trifft direkt auf die in der Probenpositionierungsvorrichtung positionierbare, bevorzugt positionierte Probe. Dementsprechend wird bevorzugt die direkte, auf eine Probe treffende Plasmastrahlung gleichmäßig, das heißt über den gesamten Umfang in gleichen Teilen, gefiltert. Als Ergebnis dieser gleichmäßigen Filterung wird eine im Wesentlichen gleichmäßige, bevorzugt gleichmäßige, Bewitterung der der direkten Plasmastrahlung ausgesetzten Oberfläche einer Probe erhalten. Bevorzugt wird eine bestimmte Art der Plasmastrahlung aus der direkten Plasmastrahlung zu mindestens 90%, bevorzugt zu mindestens 95%, bevorzugt zu mindestens 99%, bevorzugt zu 100%, herausgefiltert, wobei die Art der Plasmastrahlung ausgewählt ist aus bestimmten Teilchen, bevorzugt bestimmten Ionen, bestimmten Elektronen, bestimmten Photonen und mehreren davon. Bevorzugt trifft keine direkte Plasmastrahlung ungefiltert auf die zu behandelnde Probe.

Bevorzugt filtert der optische Filter elektromagnetische Strahlung mit einer Wellenlänge von weniger als 300 nm, bevorzugt weniger als 350 nm, und/oder von mehr als 700 nm, bevorzugt von mehr als 800 nm, bevorzugt von mehr als 900 nm. Bevorzugt sind mindestens zwei optische Filter als Plasmastrahlungsfiltervorrichtungen vorhanden, wobei der erste optische Filter elektromagnetische Strahlung mit einer Wellenlänge von weniger als 300 nm, bevorzugt weniger als 350 nm, bevorzugt weniger als 400 nm, und der zweite optische Filter elektromagnetische Strahlung mit einer Wellenlänge von mehr als 700 nm, bevorzugt mehr als 750 nm, bevorzugt mehr als 800 nm aus der Plasmastrahlung filtert.

Die optische Filtervorrichtung, auch als optischer Filter bezeichnet, ist bevorzugt für einen bestimmten Teil der elektromagnetischen Strahlung undurchlässig. Bevorzugt ist die optische Filtereinrichtung undurchlässig für elektromagnetische Strahlung mit einer Wellenlänge von weniger als 300 nm, bevorzugt weniger als 350 nm, und/oder von mehr als 700 nm, bevorzugt von mehr als 800 nm, bevorzugt von mehr als 900 nm. Bevorzugt ist der erste optische Filter undurchlässig für eine elektromagnetische Strahlung mit einer Wellenlänge von weniger als 300 nm, bevorzugt weniger als 350 nm, bevorzugt weniger als 400 nm, und der zweite optische Filter undurchlässig für eine elektromagnetische Strahlung mit einer Wellenlänge von mehr als 700 nm, bevorzugt mehr als 750 nm, bevorzugt mehr als 800 nm, bevorzugt mehr als 900 nm.

Bevorzugt werden durch den optischen Filter auch Teilchen, bevorzugt Neutralteilchen und positiv und negativ geladenen Ionen aus der Plasmastrahlung herausgefiltert. Bevorzugt sind die Neutralteilchen metastabil oder radikalisch. Bevorzugt wird durch den optischen Filter der Teil der Plasmastrahlung, insbesondere der elektromagnetischen Strahlung, herausgefiltert, die nicht im natürlichen Sonnenspektrum vorhanden sind.

Bevorzugt lässt der optische Filter zumindest ein Teil der elektromagnetischen Strahlung durch.

Bevorzugt ist das elektrisch leitfähige Gitter geerdet oder mit einer positiven oder negativen Spannung beaufschlagt. Durch das geerdete elektrisch leitfähige Gitter werden bevorzugt geladene Ionen mit einer geringen Geschwindigkeit, d.h. mit geringer Ionisationskraft, aus der Plasmastrahlung gefiltert. Bevorzugt werden durch das mit positiver Spannung beaufschlagte elektrisch leitfähige Gitter positiv geladene Ionen aus der Plasmastrahlung gefiltert. Bevorzugt werden durch ein mit negativer Spannung beaufschlagtes elektrisch leitfähiges Gitter negativ geladene Ionen aus der Plasmastrahlung herausgefiltert.

Bevorzugt lässt das elektrisch leitfähige Gitter elektromagnetische Strahlung und Neutralteilchen, bevorzugt Radikale und metastabile Neutralteilchen durch.

Bevorzugt ist es durch die Positionierung der Plasmastrahlungsfiltervorrichtung möglich, dass zumindest ein Teil der indirekten Plasmastrahlung ungefiltert auf die in der Probenpositionierungsvorrichtung positionierbare, bevorzugt positionierte Probe trifft.

Unter dem Begriff "indirekte Plasmastrahlung" wird diejenige Plasmastrahlung verstanden, bei der die durch die Plasmaerzeugungsvorrichtung erzeugten Teilchen und/oder Elektronen durch Stöße mit anderen Teilchen, insbesondere Ionen, Atome und/oder Moleküle, oder durch in der Vorrichtung zur Behandlung einer Probe vorliegende Anordnungen, insbesondere Spiegel, Platten oder räumliche Abgrenzungen, abgelenkt wurden.

Die vorliegende Erfindung betrifft in bevorzugter Ausführungsform eine Vorrichtung, wobei der Plasmaerzeugungsraum und der Probenraum gasdicht durch eine Abtrennvorrichtung voneinander abgetrennt sind.

Die vorliegende Erfindung betrifft in bevorzugter Ausführungsform eine Vorrichtung, wobei in dem Plasmaerzeugungsraum ein Druck von weniger als 1 bar, bevorzugt von weniger als 1013 mbar, bevorzugt von weniger als 1000 mbar, bevorzugt von weniger als 0,1 bar, bevorzugt von mehr als 0,4 mbar, bevorzugt von mehr als 1 mbar, bevorzugt von 1 bis 900 mbar, bevorzugt von 1 bis 100 mbar, vorliegt. Bevorzugt liegt in dem Plasmaerzeugungsraum ein Druck von 1 bar vor.

Bevorzugt kann der Druck von weniger als 1 bar durch eine Feinvakuumpumpe, bevorzugt eine Hochvakuumpumpe, erzeugt werden.

Unter dem Begriff "Feinvakuumpumpe" wird bevorzugt eine Pumpe verstanden, die derart ausgebildet ist, dass sie ein Vakuum von bis zu 1*10⁻³ mbar erzeugen kann. Unter dem Begriff "Hochvakuumpumpe" wird eine Pumpe verstanden, die so ausgebildet ist, dass sie ein Vakuum von bis zu 1*10⁻⁶ mbar erzeugen kann.

Die vorliegende Erfindung betrifft in bevorzugter Ausführungsform eine Vorrichtung, wobei in dem Probenraum ein höherer Druck als in dem Plasmaerzeugungsraum, insbesondere ein Druck von 1 bis 5 bar, bevorzugt von 1000 mbar bis 5 bar, bevorzugt von 1013 mbar bis 5 bar, bevorzugt von 1,1 bis 3 bar, bevorzugt von 1,5 bis 2 bar, vorliegt.

Bevorzugt liegt in dem Plasmaerzeugungsraum eine Temperatur von weniger als 25 °C, bevorzugt von weniger als 20 °C, bevorzugt von 10 bis 25 °C, bevorzugt von 15 bis 20 °C vor.

Bevorzugt liegt in dem Probenraum eine höhere Temperatur als in dem Plasmaerzeugungsraum, bevorzugt eine Temperatur von mindestens 20 °C, bevorzugt von mindestens 25 °C, bevorzugt von mindestens 30 °C, bevorzugt von mindestens 50 °C, bevorzugt von 25 bis 100 °C, bevorzugt von 30 bis 80 °C, bevorzugt von 50 bis 100°C, vor, insbesondere, wenn der Plasmaerzeugungsraum von dem Probenraum gasdicht durch eine Abtrennvorrichtung abgetrennt ist.

Die vorliegende Erfindung betrifft in bevorzugter Ausführungsform eine Vorrichtung, wobei in dem Plasmaerzeugungsraum ein Plasmagas vorliegt, wobei das Plasmagas ausgewählt ist aus Atomen oder zwei oder drei-atomigen Molekülen mit einem hohen Dampfdruck von mindestens 1 mbar (bezogen auf eine Temperatur von 20 °C und einen Druck von 1013 mbar). Bevorzugt ist das Plasmagas ausgewählt aus Edelgasen, Luft, Halogenverbindungen, Kohlenwasserstoffen, Sauerstoff, Stickstoff, Stickstoffmonoxid und Wasser.

Die vorliegende Erfindung betrifft in bevorzugter Ausführungsform eine Vorrichtung, wobei in dem Plasmaerzeugungsraum ein Plasmagas vorliegt, wobei das Plasmagas Wasser, insbesondere Wasserdampf, Argon, Sauerstoff, Stickstoff, Stickstoffmonoxid oder ein Gemisch davon ist.

Bevorzugt ist das Plasmagas ein Gemisch aus Wasser, bevorzugt Wasserdampf, und einem Gas ausgewählt aus Argon, Sauerstoff, Stickstoff und Kohlenstoffmonoxid. Bevorzugt ist das Plasmagas ein Gemisch aus Wasserdampf und Sauerstoff.

Bevorzugt ist die Plasmagaskonzentration identisch mit dem in dem Plasmaerzeugungsraum vorliegenden Druck. Erfindungsgemäß wird nämlich bevorzugt in dem Plasmaerzeugungsraum zunächst ein Vakuum von 1*10⁻³ mbar oder weniger erzeugt und anschließend der in dem Plasmaerzeugungsraum vorherrschende Druck durch Einleiten des Plasmagases eingestellt.

Bevorzugt liegt außer dem Plasmagas kein weiterer gasförmiger Stoff in dem Plasmaerzeugungsraum und/oder dem Probenraum vor.

Bevorzugt ist die Wasserdampfkonzentration in dem Probenraum größer oder geringer als in dem Plasmaerzeugungsraum. Bevorzugt entspricht die Wasserdampfkonzentration in dem Plasmaerzeugungsraum und/oder dem Probenraum dem in dem Probenraum und/oder Plasmaerzeugungsraum vorliegenden Druck.

Bevorzugt liegt die relative Feuchtigkeit in dem Probenraum und/oder in dem Plasmaerzeugungsraum bei mindestens 40 %, bevorzugt mindestens 50 %, bevorzugt mindestens 90 %, bevorzugt mindestens 95 %, bevorzugt bei maximal 100 %, bevorzugt genau bei 100 %, bevorzugt bei mehr als 100 %. Die "relative Feuchtigkeit" gibt das Verhältnis eines vorliegenden Wasserdampfgehaltes zur maximal möglichen Wasserdampfaufnahmekapazität bei der vorliegenden Temperatur und dem vorliegenden Druck in dem Probenraum und/oder Plasmaerzeugungsraum an.

Bevorzugt bilden der Plasmaerzeugungsraum und der Probenpositionierungsraum einen gemeinsamen Raum aus, so dass bevorzugt dieselbe Temperatur und derselbe Druck, insbesondere auch dieselbe Wasserdampfkonzentration, vorliegen.

Die vorliegende Erfindung betrifft in einer bevorzugten Ausführungsform eine Vorrichtung, wobei die Abtrennvorrichtung die mindestens eine Plasmastrahlungsfiltervorrichtung aufweist. Bevorzugt ist die Abtrennvorrichtung als die mindestens eine Plasmastrahlungsfiltervorrichtung ausgebildet. Bevorzugt ist die Abtrennvorrichtung ein optischer Filter.

Bevorzugt ist die Plasmastrahlungsfiltervorrichtung als elektrisch leitendes Gitter ausgebildet, wobei das elektrisch leitende Gitter mit einer Spannung beaufschlagt ist, so dass die Plasmastrahlung in Form von Ionen herausgefiltert wird. In bevorzugter Ausführungsform lässt das elektrisch leitfähige Gitter allein direkte Plasmastrahlung in Form von Elektronen, bevorzugt von elektromagnetischer Strahlung durch.

Bevorzugt ist der Plasmaerzeugungsraum von dem Probenraum gasdicht, bevorzugt durch einen optischen Filter, abgetrennt, wobei in dem Plasmaerzeugungsraum und dem Probenraum unterschiedliche Drücke, Temperaturen und Wasserdampfkonzentrationen vorliegen.

Bevorzugt wird die Probe weniger als 60 Minuten, bevorzugt 30 Minuten bis 55 Minuten, bevorzugt 40 bis 50 Minuten, behandelt.

Durch die Einstellung einer anderen Atmosphäre in dem Proberaum als in dem Plasmaerzeugungsraum können feuchtigkeitsverstärkte Alterungsprozesse schneller durchgeführt werden. Durch die unterschiedlichen Drücke ist auch das Eindringverhalten der Ionen, Elektronen und Moleküle in die Probe, insbesondere in deren Oberfläche, beeinflusst, bevorzugt verbessert.

Die vorliegende Erfindung, insbesondere die vorliegende Vorrichtung, kann bevorzugt als Prüftechnik in der Automobilindustrie, dem Fahrzeug- und Maschinenbau und dem Metallbau und/oder von Lack- und Kunststoffherstellern, Lack-Rohstoffherstellern und Herstellern von Prüfgeräten verwendet werden.

Die vorliegende Erfindung betrifft auch eine Vorrichtung zur Behandlung einer Probe, wobei die Vorrichtung einen Plasmaerzeugungsraum und einen Probenraum aufweist, wobei in dem Plasmaerzeugungsraum eine Plasmaerzeugungsvorrichtung und in dem Proberaum eine Probenpositionierungsvorrichtung vorhanden ist, wobei die Plasmaerzeugungsvorrichtung und die Probenpositionierungsvorrichtung räumlich voneinander beabstandet sind und so zueinander positioniert sind, dass sich die Hauptströmungsrichtung der durch die Plasmaerzeugungsvorrichtung erzeugten Plasmastrahlung im Wesentlichen parallel, bevorzugt parallel zu einer in der Probenpositionierungsvorrichtung positionierbare, bevorzugt positionierten Probe verläuft. Bevorzugt sind die Plasmaerzeugungsvorrichtung und die Probenpositionierungsvorrichtung so räumlich voneinander beabstandet und positioniert, dass keine direkte Plasmastrahlung senkrecht auf eine in der Probenpositionierungsvorrichtung positionierbare, bevorzugt positionierte, Probe treffen kann. Bevorzugt sind die Probenpositionierungsvorrichtung und die Plasmaerzeugungsvorrichtung so zueinander positioniert, dass die direkte Plasmastrahlung maximal in einem Winkel von 85°, bevorzugt maximal in einem Winkel von 60°, bevorzugt in einem Winkel von maximal 45°, bevorzugt in einem Winkelbereich von 5° bis 60°, bevorzugt in einem Winkelbereich von 10° bis 40°, auf eine in der Probenpositionierungsvorrichtung positionierbare, bevorzugt positionierte, Probe treffen kann.

Die Hauptströmungsrichtung wird bevorzugt durch eine Pumpe, bevorzugt Feinvakuumpumpe, bevorzugt Hochvakuumpumpe, erreicht. Dabei wird bevorzugt kontinuierlich Plasmagas in den Plasmaerzeugungsraum eingeleitet, ein Plasma erzeugt und kontinuierlich das Plasma und/oder das Plasmagas über einen Auslass in dem Probenraum ausgeleitet. In dieser bevorzugten Ausführungsform bilden der Plasmaerzeugungsraum und der Probenraum einen gemeinsamen Raum aus.

Die Vorrichtung zur Behandlung einer Probe ist bevorzugt frei von einer Xenonlampe. Die Vorrichtung zur Behandlung einer Probe ist bevorzugt frei von einer Bogenentladungslampe, wobei in dem Bogenentladungsraum bevorzugt ein Druck von mehr als 1 bar, bevorzugt von mehr als 2 bar, vorliegt und dieser bevorzugt im Betrieb auf über 50 bar ansteigt. Die Vorrichtung zur Behandlung einer Probe ist bevorzugt frei von einer Plasmaerzeugungsvorrichtung, die so ausgebildet ist, dass sie ein komplettes Sonnenspektrum, bevorzugt mit Hilfe von Xenon und Bogenentladung, erzeugt kann. Die Vorrichtung zur Behandlung einer Probe ist bevorzugt frei von einer Plasmaerzeugungsvorrichtung, die so ausgebildet ist, dass sie ein kontinuierliches Spektrum zwischen 250 bis 800 nm, bevorzugt mit Hilfe von Xenon und Bogenentladung, erzeugt kann. Das kontinuierliche Spektrum weist alle Wellenlängen zwischen 250 bis 800 nm auf, wobei die Strahlungsintensität bei den einzelnen Wellenlängen unterschiedlich oder gleich hoch sein kann.

Die erfindungsgemäß bevorzugt eingesetzte Plasmaerzeugungsvorrichtung liefert ein diskontinuierliches Strahlungsspektrum, d.h. nicht alle Wellenlängen im sichtbaren und UV-Bereich sind im Spektrum der erzeugten elektromagnetischen Plasmastrahlung vorhanden. Bevorzugt ist die Plasmaerzeugungsvorrichtung so ausgebildet, dass sie eine elektromagnetische Plasmastrahlung bestimmter voneinander beanstandeter Wellenlängen im sichtbaren und UV-Bereich, bevorzugt im Bereich von 250 bis 800 nm, erzeugt. Bevorzugt erzeugt die erfindungsgemäß bevorzugt eingesetzte Plasmaerzeugungsvorrichtung kaum oder gar keine Abwärme. Bevorzugt ist die von der erfindungsgemäß bevorzugt eingesetzten Plasmaerzeugungsvorrichtung während des Betreibens erzeugte Abwärme um mindestens den Faktor 2, bevorzugt mindestens um den Faktor 5, bevorzugt mindestens um den Faktor 10, bevorzugt mindestens um den Faktor 50, geringer als die während des Betreibens erzeugte Abwärme einer Bogenentladungslampe, bevorzugt einer Xenonlampe. Bevorzugt ist die Plasmaerzeugungsvorrichtung so ausgebildet, dass sie eine Leistungsaufnahme von weniger als 10 kW, bevorzugt weniger als 7 kW, bevorzugt weniger als 5 kW aufweist.

Die vorliegende Erfindung betrifft auch ein Verfahren zur Behandlung einer Probe, wobei das Verfahren folgende Schritte umfasst:
a) Bereitstellen einer Probe,
b) Bereitstellen einer erfindungsgemäßen oder erfindungsgemäß bevorzugten Vorrichtung,
c) Positionieren der Probe in der Probenpositionierungsvorrichtung,
d) Behandeln der Probe mit mindestens einem Teil der mit der Plasmaerzeugungsvorrichtung erzeugten Plasmastrahlung, und
e) Erhalten einer mit mindestens einem Teil der Plasmastrahlung behandelten Probe.

In Schritt d) wird ein Teil der Plasmastrahlung durch die in der erfindungsgemäßen Vorrichtung vorhandenen Plasmastrahlungsfiltervorrichtung gefiltert. Bevorzugt wird in Schritt d) die Probe mit einer Plasmastrahlung behandelt, wobei ein Teil der Plasmastrahlung, insbesondere ein bestimmter Teil der Elektronenstrahlung und/oder bestimmter Teil der Ionenstrahlung, gefiltert wird, bevorzugt zu mindestens 95%, bevorzugt zu 100 % gefiltert wird. Der in Schritt d) zur Behandlung der Probe eingesetzte Teil der Plasmastrahlung setzt sich aus der nicht gefilterten, das heißt von der Plasmastrahlungsfiltervorrichtung durchgelassenen, direkten Plasmastrahlung und indirekter Plasmastrahlung zusammen, bevorzugt besteht sie aus der nicht gefilterten direkten Plasmastrahlung.

Bevorzugt wird vor dem Schritt d) ein Schritt i) durchgeführt, wobei die Plasmaerzeugungsvorrichtung eine Plasmastrahlung erzeugt, bevorzugt mit einem Plasmagas, wobei das Plasmagas bevorzugt ausgewählt ist aus Wasser, bevorzugt Wasserdampf, Argon, Stickstoff, Sauerstoff, Stickstoffmonoxid oder Gemischen davon. Bevorzugt ist das Plasmagasgemisch ein Gemisch aus Wasserdampf und Sauerstoff, Stickstoff, Argon oder Stickstoffmonoxid, bevorzugt aus Wasserdampf und Sauerstoff.

Die vorliegende Erfindung betrifft in bevorzugter Ausführungsform eine Vorrichtung, wobei in dem Plasmaerzeugungsraum ein Plasmagas vorliegt, wobei das Plasmagas ausgewählt ist aus Atomen oder zwei oder drei-atomigen Molekülen mit einem hohen Dampfdruck von mindestens 1 mbar (bei einer Temperatur von 20 °C und einem Druck von 1013 mbar). Bevorzugt ist das Plasmagas ausgewählt aus Edelgasen, Luft, Halogenverbindungen, Kohlenwasserstoffen, Sauerstoff, Stickstoff, Stickstoffmonoxid und Wasser.

In bevorzugter Ausführungsform gelten die im Zusammenhang mit der erfindungsgemäßen Vorrichtung getroffenen Aussagen und/oder die bevorzugten Ausführungsformen der erfindungsgemäßen Vorrichtung mutatis mutandis auch für das erfindungsgemäße Verfahren, insbesondere bevorzugte Ausführungsformen davon.

Durch das erfindungsgemäße Verfahren und die erfindungsgemäße Vorrichtung ist es möglich, die Langzeitbeständigkeit von Lacken, Beschichtungen, und/oder Kunststoffen in möglichst kurzer Zeit und präzise, insbesondere vergleichbar mit einer natürlichen Bewitterung zu testen, bestimmen oder prüfen.

In einer bevorzugten Ausführungsform gelten die im Zusammenhang mit der erfindungsgemäßen Vorrichtung und/oder Verfahren getroffenen Aussagen und/oder die bevorzugten Ausführungsformen der erfindungsgemäßen Vorrichtung und/oder Verfahren mutatis mutandis auch für die erfindungsgemäße Verwendung der Vorrichtung.

Die vorliegende Erfindung betrifft insbesondere auch die Verwendung einer erfindungsgemäßen Vorrichtung zur Behandlung einer Probe, insbesondere zur Bewitterung einer Probe.

Weitere vorteilhafte Ausgestaltungen der Erfindung ergeben sich aus den Unteransprüchen.

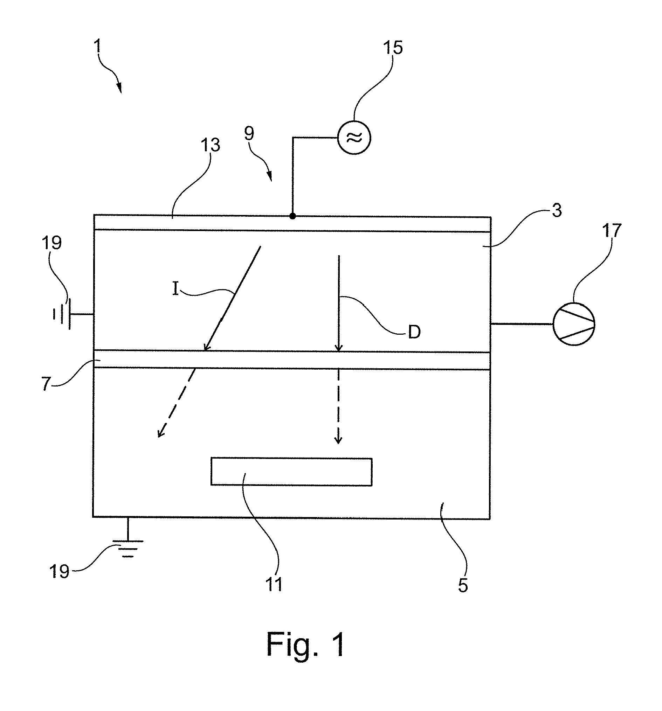

Die Erfindung wird anhand der vorliegenden Figuren näher erläutert, wobei Figuren 1 bis 4 jeweils eine erfindungsgemäße Ausgestaltung der vorliegenden erfindungsgemäßen Vorrichtung zur Behandlung einer Probe darstellen.

Figur 1 zeigt eine Vorrichtung 1 zur Behandlung einer Probe, wobei die Vorrichtung 1 einen Plasmaerzeugungsraum 3, einen Probenraum 5 und mindestens eine Plasmastrahlungsfiltervorrichtung 7 aufweist. In dem Plasmaerzeugungsraum 3 ist eine Plasmaerzeugungsvorrichtung 9 und in dem Probenraum 5 eine Probe 11 gezeigt, wobei die Probe 11 durch eine nicht gezeigte Probenpositionierungsvorrichtung gehalten wird. Die Plasmastrahlungsfiltervorrichtung 7 ist in der Vorrichtung 1 als Abtrennvorrichtung ausgebildet, so dass der Plasmaerzeugungsraum 3 von dem Probenraum 5 gasdicht abgetrennt ist. Durch diese gasdichte Abtrennung ist es möglich, unterschiedliche Temperaturen, Drücke und Wasserdampfkonzentrationen in dem Plasmaerzeugungsraum 3 und dem Probenraum 5 bereitzustellen. Als Plasmagas können Atome oder zwei oder drei-atomigen Molekülen mit einem hohen Dampfdruck von mindestens 1 mbar (bei einer Temperatur von 20 °C und einem Druck von 1013 mbar) verwendet werden. Bevorzugt kann das Plasmagas ausgewählt werden aus Edelgasen, Luft, Halogenverbindungen, Kohlenwasserstoffen, Sauerstoff, Stickstoff, Stickstoffmonoxid und Wasser, bevorzugt Wasser, insbesondere Wasserdampf, Argon, Sauerstoff, Stickstoff und Stickstoffmonoxid. Die Plasmaerzeugungsvorrichtung 9 weist mindestens eine, bevorzugt mindestens zwei Elektroden 13 und eine Wechselstromquelle 15 auf. Durch die Plasmaerzeugungsvorrichtung 9 kann das Plasma insbesondere die Plasmastrahlung, durch Gleichstrom, Kilohertz, Megahertz oder durch Mikrowellen erzeugt werden. Der Druck in dem Plasmaerzeugungsraum kann durch die dargestellte Pumpe 17, bevorzugt Feinvakuumpumpe, bevorzugt Hochvakuumpumpe, auf Unteratmosphärendruck, bevorzugt von weniger als 1 bar, bevorzugt von weniger als 100 mbar, reduziert werden. Zudem sind sowohl der Plasmaerzeugungsraum 3 als auch der Probenraum 5 jeweils durch eine Erdungsvorrichtung 19 geerdet. In den Plasmaerzeugungsraum 3 können Plasmagase, wie Wasserdampf, Argon, Sauerstoff, Stickstoff, Stickstoffmonoxid und Gemische davon, eingeleitet werden. Durch die Plasmaerzeugungsvorrichtung 9 kann ein Plasma erzeugt werden. Das Plasma besteht bevorzugt aus sich bewegenden Teilchen, Elektronen und Photonen, die bevorzugt als Plasmastrahlung bezeichnet werden. Ein Teil der Plasmastrahlung, insbesondere die Ionen und ein Teil der elektromagnetischen Strahlung, kann durch den optischen Filter 7 herausgefiltert, d.h. davon abgehalten werden auf die in der Probenpositionierungsvorrichtung positionierte Probe 11 zu treffen.

Ebenfalls ist in Figur 1 eine mögliche direkte Plasmastrahlung D und eine mögliche indirekte Plasmastrahlung I dargestellt. Die direkte Plasmastrahlung D trifft auf den optischen Filter 7, wobei ein Teil der direkten Plasmastrahlung D, insbesondere die Teilchen, Elektronen und ein Teil der elektromagnetischen Strahlung, herausgefiltert wird und nur ein Teil der elektromagnetischen Strahlung diesen optischen Filter 7 passiert und auf die Probe 11 trifft. Die indirekte Plasmastrahlung I kann ebenfalls auf den optischen Filter 7 treffen, wobei derselbe Teil der Plasmastrahlung herausgefiltert wird, wie bei der direkten Plasmastrahlung D. Jedoch trifft der nicht gefilterte Teil der Plasmastrahlung der indirekten Plasmastrahlung I nicht direkt auf die Probe 11.

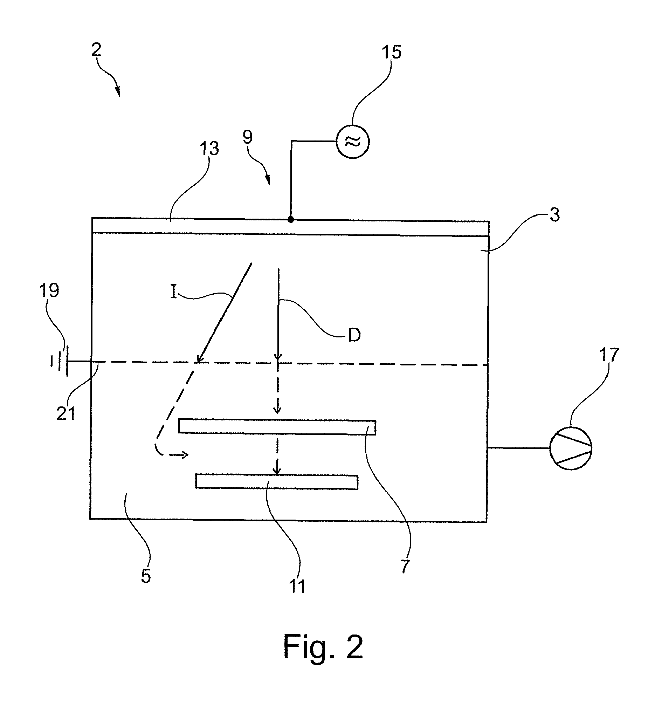

Figur 2 zeigt eine Vorrichtung 2, wobei der Plasmaerzeugungsraum 3 und der Probenraum 5 durch ein elektrisch leitfähiges Gitter 21 voneinander getrennt sind. In dem Plasmaerzeugungsraum 3 befindet sich genauso wie in der Vorrichtung gemäß Figur 1 eine passende Plasmaerzeugungsvorrichtung 9, welche mindestens eine, bevorzugt mindestens zwei Elektroden 13 und eine Wechselstromquelle 15 aufweist. In dem Probenraum 5 liegt neben einer Probe 11 auch ein optischer Filter 7 vor. Somit weist die Vorrichtung 2 zwei unterschiedliche Plasmastrahlungsfiltervorrichtungen auf, nämlich einen optischen Filter 7 und ein elektrisch leitfähiges Gitter 21. Durch die Pumpe 17, bevorzugt eine Feinvakuumpumpe, bevorzugt eine Hochvakuumpumpe, kann ein Druck von weniger als 1 bar, bevorzugt von weniger als 100 mbar, in dem Probenraum 5 und den Plasmaerzeugungsraum 3 erzeugt werden. Durch diese Anordnung kann nur ganz gezielt eine bestimmte Plasmastrahlung auf die Probe 11 einwirken. Wie in der Figur 2 gezeigt, trifft die direkte Plasmastrahlung D zunächst auf das elektrisch leitfähige Gitter 21, wodurch ein Teil der Plasmastrahlung herausgefiltert wird und anschließend noch auf den optischen Filter 7, wobei ein anderer Teil der Plasmastrahlung herausgefiltert wird. Die indirekte Plasmastrahlung I kann beispielsweise allein durch das elektrisch leitfähige Gitter gefiltert werden und dann durch Ablenkung auf die Probe 11 treffen. Das elektrisch leitfähige Gitter, das gemäß Figur 2 durch eine Erdungseinrichtung 19 geerdet ist, kann auch mit einer positiven oder einer negativen Spannung beaufschlagt werden. Somit ist es möglich, gezielt geladene oder ungeladene Teilchen und Elektronen in den Probenraum gelangen zu lassen.

Insbesondere ist es über den optischen Filter möglich, direkte Einwirkung von Plasmateilchen und Plasmaelektronen sowie eines bestimmten Teil an elektromagnetischer Strahlung zu verhindern. Insbesondere durch die Wahl des Plasmagases, insbesondere durch ein Gemisch aus Wasserdampf und einem weiteren Gas, ausgewählt aus Argon, Sauerstoff, Stickstoff, oder Stickstoffmonoxid, ist es möglich, eine ganz gezielte Behandlung der Probe bereitzustellen, die insbesondere sehr ähnlich oder sogar identisch zu einer natürlichen Bewitterung ist.

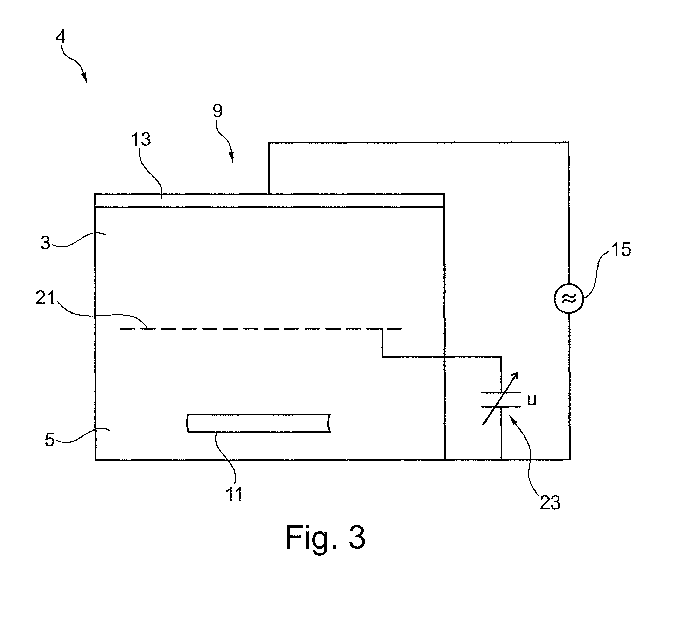

Figur 3 zeigt eine Vorrichtung 4 mit einem Plasmaerzeugungsraum 3 und einen Probenraum 5, wobei in dem Plasmaerzeugungsraum 3 eine Plasmaerzeugungsvorrichtung 9, welche mindestens eine, bevorzugt mindestens zwei Elektroden 13 und eine Wechselstromquelle 15 aufweist, und wobei in dem Probenraum eine Probe 11 vorliegt. Als Plasmastrahlungsfiltervorrichtung liegt zwischen der Probe 11 und der Plasmaerzeugungsvorrichtung 9 ein mit Spannung beaufschlagbares, elektrisch leitfähiges Gitter 21, wobei die Spannung durch die Spannungsquelle 23 beaufschlagt wird. Bevorzugt ist das mit Spannung beaufschlagbare elektrisch leitfähige Gitter 21 so positioniert und ausgebildet, dass es den direkten Ionenbeschuss der Probe 11 verhindert.

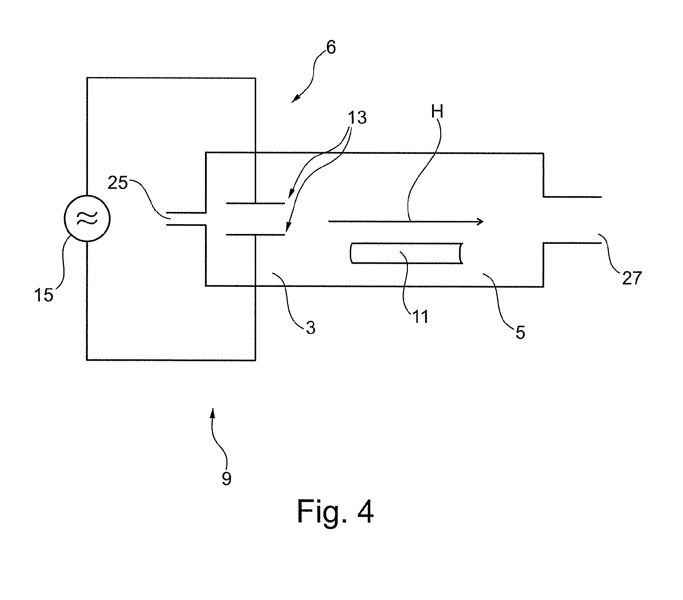

Figur 4 zeigt eine Vorrichtung 6 mit einem Plasmaerzeugungsraum 3 und einem Probenraum 5, wobei der Probenraum 5 und der Plasmaerzeugungsraum 3 einen gemeinsamen Raum ausbilden. In dem Plasmaerzeugungsraum 3 wird das Plasma durch eine Plasmaerzeugungsvorrichtung 9 erzeugt, wobei die Plasmaerzeugungsvorrichtung zwei Elektroden 13 und eine Spannungsquelle 15 aufweist. Zudem weist die Vorrichtung 6 einen Gaseinlass 25, insbesondere für die Plasmagase, und einen Auslass 27 auf, wobei an dem Auslass 27 eine nicht dargestellte Pumpe angeschlossen werden kann, so dass bevorzugt ein stetiger Fluss, auch die Hauptströmungsrichtung H bezeichnet, des im Plasmaerzeugungsraum 3 erzeugten Plasmas über die Probe 11 hinweg in Richtung der Pumpe erfolgt.

## Patentansprüche

1. Vorrichtung (1, 2, 4, 6) zur Behandlung einer Probe, wobei die Vorrichtung einen Plasmaerzeugungsraum (3) und einen Probenraum (5) aufweist, wobei in dem Plasmaerzeugungsraum (3) eine Plasmaerzeugungsvorrichtung (9) und in dem Probenraum (5) eine Probenpositionierungsvorrichtung vorhanden ist, wobei die Plasmaerzeugungsvorrichtung (9) und die Probenpositionierungsvorrichtung räumlich voneinander beabstandet sind und so positioniert, bevorzugt zu einer Plasmastrahlungsfiltervorrichtung (7, 21), und ausgebildet sind, dass ein um mindestens 0,1% geringerer Anteil der durch die Plasmaerzeugungsvorrichtung (9) erzeugten direkten Plasmastrahlung (D; bezogen auf jeweils eine Komponente der direkten Plasmastrahlung) auf eine in der Probenpositionierungsvorrichtung positionierbare Probe (11) trifft, als bei einer Vorrichtung, aufweisend die gleiche Plasmaerzeugungsvorrichtung und die gleiche Probenpositionierungsvorrichtung, wobei die gleiche durch die Plasmaerzeugungsvorrichtung erzeugte direkte Plasmastrahlung (D) ungefiltert und teilweise senkrecht auf die gleiche in der Probenpositionierungsvorrichtung positionierbare Probe trifft.

2. Vorrichtung nach Anspruch 1, wobei die Vorrichtung mindestens eine Plasmastrahlungsfiltervorrichtung (7, 21) aufweist, wobei die Plasmastrahlungsfiltervorrichtung (7, 21) zwischen der Plasmaerzeugungsvorrichtung (9) und der Probenpositionierungsvorrichtung vorliegt und so positioniert und ausgebildet ist, dass sie mindestens einen Teil der durch die Plasmaerzeugungsvorrichtung (9) erzeugte und direkt auf eine in der Probenpositionierungsvorrichtung positionierbare Probe (11) treffende Plasmastrahlung (D) filtert.

3. Vorrichtung nach einem der vorstehenden Ansprüche, wobei die Plasmaerzeugungsvorrichtung (9) und die Probenpositionierungsvorrichtung räumlich voneinander beabstandet sind und so zueinander positioniert sind, dass sich die Hauptströmungsrichtung (H) der durch die Plasmaerzeugungsvorrichtung (9) erzeugten Plasmastrahlung räumlich versetzt und im Wesentlichen parallel zu einer in der Probenpositionierungsvorrichtung positionierbaren Probe (11) verläuft.

4. Vorrichtung nach einem der vorstehenden Ansprüche, wobei die mindestens eine Plasmastrahlungsfiltervorrichtung (7, 21) als optischer Filter (7) oder als elektrisch leitfähiges Gitter (21) ausgebildet ist.

5. Vorrichtung nach einem der vorstehenden Ansprüche, wobei der Plasmaerzeugungsraum (3) und der Probenraum (5) gasdicht durch eine Abtrennvorrichtung voneinander abgetrennt sind.

6. Vorrichtung nach einem der vorstehenden Ansprüche, wobei in dem Plasmaerzeugungsraum (3) ein Druck von weniger als 1 bar vorliegt.

7. Vorrichtung nach einem der vorstehenden Ansprüche, wobei in dem Probenraum (5) ein höherer Druck als in dem Plasmaerzeugungsraum (3) vorliegt.

8. Vorrichtung nach einem der vorstehenden Ansprüche, wobei in dem Plasmaerzeugungsraum (3) ein Plasmagas vorliegt, wobei das Plasmagas Wasser, Argon, Sauerstoff, Stickstoff, Stickstoffmonoxid oder ein Gemisch davon ist.

9. Vorrichtung nach einem der vorstehenden Ansprüche, wobei die Abtrennvorrichtung die mindestens eine Plasmastrahlungsfiltervorrichtung (7, 21) aufweist.

10. Verfahren zur Behandlung einer Probe, wobei das Verfahren folgende Schritte umfasst:
a) Bereitstellen einer Probe (11),
b) Bereitstellen einer Vorrichtung nach einem der Ansprüche 1 bis 9,
c) Positionieren der Probe (11) in der Probenpositionierungsvorrichtung,
d) Behandeln der Probe (11) mit mindestens einem Teil der mit der Plasmaerzeugungsvorrichtung (9) erzeugten Plasmastrahlung, und
e) Erhalten einer mit mindestens einem Teil der Plasmastrahlung behandelten Probe (11).

11. Verwendung einer Vorrichtung nach einem der Ansprüche 1 bis 9 zur Behandlung einer Probe, insbesondere zur Bewitterung einer Probe.
